# DEMANDE DE BREVET EUROPEEN

(11) **EP 4 386 485 A1**
(43) Date de publication de la demande: **19.06.2024**
(21) Numéro de dépôt: 22214339.8
(22) Date de dépôt: 16.12.2022
(51) Int. Cl.: G04B 13/02, G04B 15/14

(54) **PROCÉDÉ DE FABRICATION D'UN COMPOSANT HORLOGER**

(71) Demandeur: ROLEX SA, 1211 Genève 26 (CH)
(72) Inventeur:
(74) Mandataire: Moinas & Savoye SARL

(57) **Abrégé**

Procédé de fabrication d'un composant horloger (10), comprenant au moins une première portion comprenant au moins un flanc fonctionnel, destiné à une transmission d'énergie vers un autre composant ou à une dissipation d'énergie provenant d'un autre composant, et au moins une deuxième portion comprenant une surface de guidage, caractérisé en ce que le procédé comprend :
- une première étape de micro-injection (E1) formant une ébauche (10') du composant horloger, ladite ébauche comprenant ladite au moins une première portion et ledit au moins un flanc fonctionnel et comprenant une ébauche de la deuxième portion, puis
- une deuxième étape d'usinage (E2), en particulier une deuxième étape d'usinage laser, notamment d'usinage laser femtoseconde, d'au moins une partie de l'ébauche du composant horloger, cette partie comprenant l'ébauche de la deuxième portion pour former la deuxième portion comprenant ladite surface de guidage.

## Description

### Introduction

L'invention concerne un procédé de fabrication d'un composant horloger comprenant une portion fonctionnelle destinée à transmettre une énergie vers un autre composant d'un mouvement horloger ou à dissiper une énergie provenant d'un autre composant d'un mouvement horloger, et une portion de guidage destinée à guider le mouvement du composant horloger, notamment en rotation et/ou en translation. L'invention concerne aussi un composant horloger en tant que tel issu d'un tel procédé, et un mouvement horloger comprenant un tel composant horloger. L'invention concerne enfin une pièce d'horlogerie comprenant un tel composant horloger ou un tel mouvement horloger.

### Etat de l'Art

L'usinage de composants horlogers en céramique technique tels que décrits par exemple dans la demande de brevet EP3258325 est une opération délicate qui requiert une parfaite maîtrise des interactions entre l'outil et la matière, afin de ne pas induire de contraintes dans la céramique, ni de nouveaux défauts, notamment en surface, qui s'avéreraient être des amorces de fissure néfastes notamment à la tenue aux chocs des composants.

La fabrication d'axes horlogers de petite dimension, par exemple de diamètre inférieur à 2 mm, s'avère particulièrement délicate, notamment en présence de pivots de très faible diamètre (< 200 microns, voire < 100 microns) aux extrémités de l'axe, qui ont pour fonction d'assurer le guidage, en particulier le pivotement, des axes. Ces pivots doivent présenter une géométrie parfaitement circulaire, c'est-à-dire former une surface de révolution aussi parfaite que possible, et des dimensions respectées scrupuleusement. Ils sont prévus pour coopérer avec un palier, et tout défaut géométrique tel qu'un mal-rond ou un diamètre non respecté aura pour conséquence une diminution des performances chronométriques du mouvement dans lequel cet axe sera intégré. Il en va de même si les surfaces des pivots qui coopèrent avec un palier présentent une rugosité trop conséquente. Ceci est plus particulièrement valable pour l'axe de balancier.

C'est la raison pour laquelle les axes selon l'état de l'art sont usinés par décolletage dans des aciers, puis les pivots sont roulés pour obtenir à la fois la rugosité, la dureté et la forme finales.

En complément, la réalisation d'une portion fonctionnelle autour d'un axe horloger, en particulier les dents d'un pignon, induit de même une complexité, notamment du fait de la forme qu'est susceptible de prendre le pignon, en particulier de la géométrie ou de l'orientation particulière des flancs fonctionnels de ses dents, pour lesquels il est nécessaire d'atteindre de même une géométrie extrêmement précise et un état de surface irréprochable, notamment une très faible rugosité.

Les techniques d'usinage traditionnelles peuvent être délicates à mettre en oeuvre pour obtenir des composants de forme complexe, comprenant non seulement une portion de guidage mais aussi une portion fonctionnelle. En particulier, selon la forme de la portion fonctionnelle, notamment selon par exemple la géométrie ou l'orientation particulière des flancs fonctionnels des dents d'un pignon, les techniques d'usinage traditionnelles ne sont pas applicables. De plus, ces techniques ne sont pas adaptées à tous les matériaux utilisés pour les composants horlogers. Notamment, elles sont très difficiles, voire impossibles, à appliquer à des pièces en céramique, en particulier parce que leur décolletage au moyen d'outils de coupe ou de meules est très long, et les outils s'usent rapidement.

La réalisation d'un composant horloger qui comprend à la fois une portion fonctionnelle et une portion de guidage est donc particulièrement complexe, puisque le procédé doit permettre d'atteindre les exigences géométriques et mécaniques spécifiques desdites deux portions. Les rugosités des surfaces desdites deux portions doivent par ailleurs être adaptées à leurs fonctions respectives. Un tel procédé doit de plus être le plus simple possible pour pouvoir être déployé à grande échelle avec un temps de fabrication raisonnable.

Le but de l'invention est de fournir un procédé de fabrication d'un composant horloger qui comprend à la fois au moins une portion fonctionnelle et au moins une portion de guidage.

Un premier objet de l'invention est de fournir un procédé de fabrication d'un composant horloger qui comprend à la fois une portion fonctionnelle et une portion de guidage, qui permet d'obtenir une géométrie précise, des rugosités et des propriétés mécaniques optimales du composant horloger, notamment desdites deux portions.

Un deuxième objet de l'invention est de fournir un procédé de fabrication le plus simple possible d'un composant horloger qui comprend à la fois une portion fonctionnelle et une portion de guidage.

Un troisième objet de l'invention est de fournir un procédé de fabrication d'un composant horloger qui comprend à la fois une portion fonctionnelle et une portion de guidage, compatible avec un maximum de matériaux.

### Brève description de l'invention

A cet effet, l'invention repose sur un procédé de fabrication d'un composant horloger, comprenant au moins une première portion comprenant au moins un flanc fonctionnel, destiné à une transmission d'énergie vers un autre composant ou à une dissipation d'énergie provenant d'un autre composant, et au moins une deuxième portion comprenant une surface de guidage, caractérisé en ce que le procédé comprend :
- une première étape de micro-injection formant une ébauche du composant horloger, ladite ébauche comprenant ladite au moins une première portion et ledit au moins un flanc fonctionnel et comprenant une ébauche de la deuxième portion, puis
- une deuxième étape d'usinage, en particulier une deuxième étape d'usinage laser, notamment d'usinage laser femtoseconde, d'au moins une partie de l'ébauche du composant horloger, cette partie comprenant l'ébauche de la deuxième portion pour former la deuxième portion comprenant ladite surface de guidage.

L'invention porte aussi sur un composant horloger, comprenant au moins une première portion comprenant au moins un flanc fonctionnel, destiné à une transmission d'énergie vers un autre composant ou à une dissipation d'énergie provenant d'un autre composant, et au moins une deuxième portion comprenant une surface de guidage, caractérisé en ce que la première et la deuxième portions du composant horloger se présentent sous une forme monobloc d'un seul tenant et en ce que ledit flanc fonctionnel présente une rugosité Ra de sa surface inférieure ou égale à 50 nm, voire inférieure ou égale à 15 nm, voire inférieure ou égale à 12 nm, voire inférieure ou égale à 10 nm, et optionnellement supérieure ou égale à 5 nm.

L'invention est plus précisément définie par les revendications.

### Brève description des figures

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente une première vue en coupe d'un moule de fabrication d'une ébauche de composant horloger selon un mode de réalisation de l'invention.
La figure 2 représente une pièce injectée issue du moule de la figure 1 selon le mode de réalisation de l'invention.
La figure 3 représente une ébauche de composant horloger obtenue par une première étape du procédé de fabrication selon un mode de réalisation de l'invention.
Les figures 4 et 5 représentent la mise en oeuvre d'une deuxième étape du procédé de fabrication selon le mode de réalisation de l'invention.
La figure 6 représente une sous-étape intermédiaire de la deuxième étape du procédé de fabrication selon le mode de réalisation de l'invention.
La figure 7 représente une sous-étape en fin de deuxième étape du procédé de fabrication selon le mode de réalisation de l'invention.
La figure 8 représente un organigramme simplifié du procédé de fabrication d'un composant horloger selon le mode de réalisation de l'invention.
Les figures 9 à 12 représentent un premier exemple de composant horloger obtenu par le procédé de fabrication selon l'invention.
La figure 13 représente une ébauche d'un deuxième exemple de composant horloger obtenue par une première étape du procédé de fabrication selon un mode de réalisation de l'invention.
La figure 14 représente le deuxième exemple de composant horloger obtenu par le procédé selon l'invention.

Le concept de l'invention consiste à combiner deux techniques éloignées de fabrication, d'une part l'injection, en particulier une technique CIM (Ceramic Injection Moulding) ou MIM (Metal Injection Moulding), et d'autre part l'usinage, pour fabriquer un composant horloger en deux phases, formant respectivement dans leur forme finie ou quasi-finie une première portion comprenant au moins un flanc fonctionnel et une deuxième portion comprenant au moins une surface de guidage.

Un procédé de fabrication d'un composant horloger selon un mode de réalisation de l'invention va maintenant être décrit. Dans ce mode de réalisation décrit, le composant horloger selon ce premier exemple de réalisation est un pignon d'échappement.

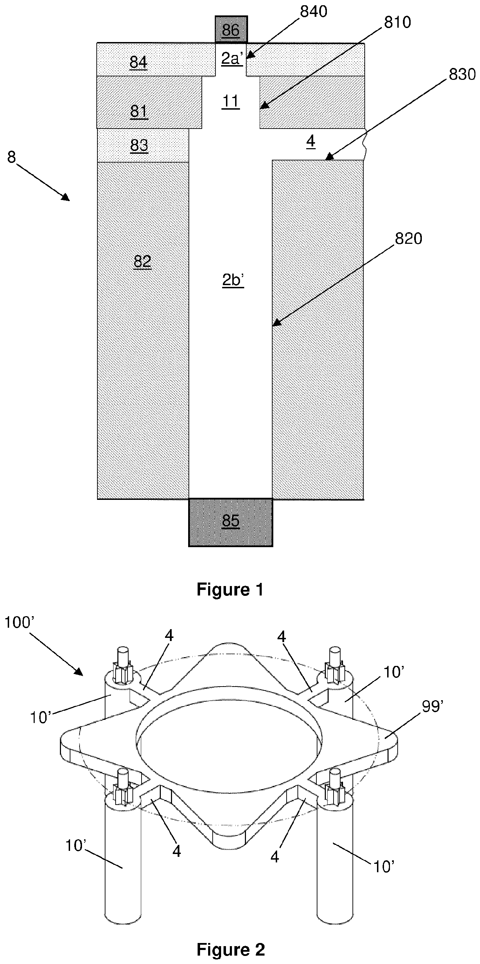

La figure 1 représente une vue en coupe d'un coeur d'un moule d'injection 8. Selon ce mode de réalisation avantageux, ce moule d'injection 8 est de type modulaire, comprend une cavité d'injection formée par plusieurs plaques intermédiaires amovibles, pour offrir de la flexibilité pour la définition de la géométrie de cette cavité d'injection. Ainsi, le moule d'injection 8 comprend notamment une première plaque 81 intermédiaire amovible, intercalée entre une deuxième plaque 83 amovible et une troisième plaque 84 amovible, cet ensemble étant associé à une première partie 82, pouvant être fixe, du moule d'injection. La cavité d'injection est ainsi définie par la réunion de plusieurs découpes : une découpe 820 de la première partie 82, une découpe 810 de la première plaque 81, une découpe 830 de la deuxième plaque 83, et une découpe 840 de la troisième plaque 84. Le moule d'injection 8 comprend également des éjecteurs 85 et 86 disposés de part et d'autre d'ouvertures opposées de la cavité d'injection.

Lors de la phase d'injection dans un tel moule d'injection 8, le matériau du futur composant horloger, qui sera appelé matériau du composant, est injecté au sein de la cavité d'injection, notamment formée par les découpes 810, 820, 840, par l'intermédiaire de la découpe 830, ce matériau du composant provenant du centre du moule et formant une carotte centrale d'injection.

Le matériau du composant qui est injecté peut être un polymère, un métal, un composite, un cermet, ou une céramique technique. Avantageusement, la céramique technique est majoritairement ou principalement (en masse ou en mole) composée d'oxyde de zirconium, et/ou d'alumine. Ainsi, l'oxyde de zirconium et/ou l'alumine peuvent être les éléments prépondérants dans la céramique. Néanmoins, selon une variante de réalisation, la proportion en masse ou en mole d'oxyde de zirconium et/ou d'alumine peut être inférieure à 50 %.

Dans le cas d'un métal, l'injection peut comprendre l'injection d'un alliage métallique en fusion ou à l'état vitreux (à savoir à une température d'injection inférieure à la température de fusion et supérieure à la température de transition vitreuse) dans le moule d'injection. Après son refroidissement, il est possible d'obtenir par exemple une ébauche de composant horloger dans un matériau amorphe, comme un verre métallique. Notamment, le matériau de l'ébauche peut être tout alliage amorphe dont la GFA (Glass Foming Ability) permet d'obtenir une structure amorphe dans les dimensions typiques de composants horlogers, notamment un alliage métallique amorphe comprenant une base métallique formée d'au moins un métal parmi les éléments Ni, Cu, Pd, Pt, Fe, Co, Ti, Nb, Zr.

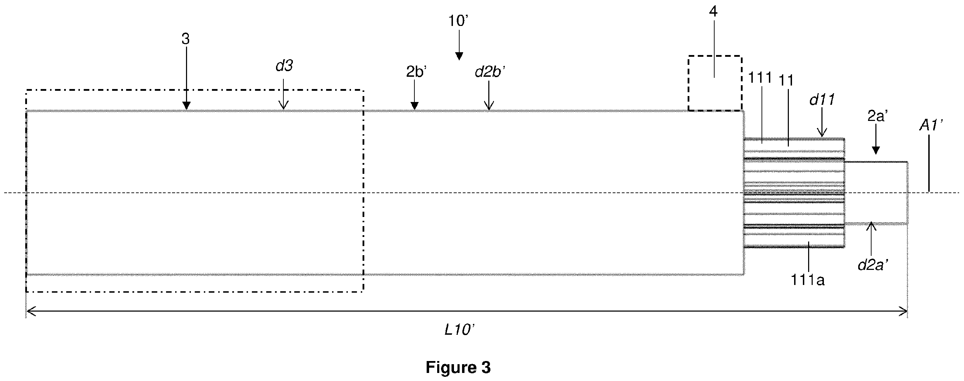

La figure 2 représente une pièce injectée 100' obtenue après son démoulage du moule d'injection 8 décrit ci-dessus. Cette pièce injectée 100' comprend ici quatre ébauches 10' identiques de composant horloger, liées entre elles par une nappe d'injection, en particulier par une portion centrale 99' de ladite pièce injectée 100' et par le biais de supports 4, et une carotte centrale d'injection (non représentée). Après leur séparation, chaque ébauche 10' se présente sous la forme représentée par la figure 3, qui sera décrite par la suite.

Une fois cette pièce injectée 100' consolidée, par exemple par refroidissement dans le cas d'une pièce injectée 100' en métal ou en polymère ou par déliantage et frittage dans le cas d'une pièce injectée 100' en céramique, les ébauches 10' sont donc retirées de la pièce 100' en les séparant de la portion centrale 99' par une rupture des supports 4. A cet effet, les supports 4 peuvent comprendre des zones de moindre résistance mécanique, telles que des échancrures, afin de favoriser leur rupture lors de cette phase.

Le sous-ensemble du moule d'injection 8 formé par la première partie 82 et les plaques 81, 83, 84 définit ainsi une cavité qui permet la formation d'au moins une ébauche 10' lors d'une phase d'injection, qui représente une première étape de micro-injection E1 du procédé de fabrication d'un composant horloger.

Comme évoqué précédemment, cette première étape E1 met avantageusement à profit un moule d'injection 8 modulaire, c'est-à-dire un moule d'injection 8 doté d'au moins une plaque 81 intermédiaire amovible. Une telle architecture peut être telle que définie par la publication EP3981571. L'architecture d'un tel moule d'injection permet l'évolution de manière flexible du moule d'injection, par le simple changement d'au moins une plaque intermédiaire, sans besoin de fabriquer l'intégralité du moule pour chaque changement. Ainsi, à titre d'exemple, le profil des dents 111 du pignon 11 de l'ébauche 10', qui sera détaillée par la suite, peut être modifié par un simple changement de plaque intermédiaire. Par ailleurs, il est possible de former, par exemple, un pignon étagé qui comprend des dentures superposées dotées de différents diamètres de tête. Pour ce faire, le pignon pourrait dans ce cas résulter d'une superposition de plaques intermédiaires comprenant des découpes formant des cavités d'injection figurant les dentures superposées des différents étages du pignon.

Avantageusement, une plaque 81 amovible est réalisée par la technologie LIGA. Cette approche comprend de manière connue la formation d'un moule par photolithographie, puis la croissance d'un métal au sein du moule. Cette technologie LIGA est avantageuse car elle permet d'obtenir une plaque 81 avec une grande précision, tout en permettant de reproduire, à l'aide d'un même masque, plusieurs plaques intermédiaires identiques. Avantageusement, grâce à la technologie LIGA, la découpe 810 de la plaque 81 peut être destinée à former une géométrie complexe d'une ébauche 10' de composant horloger 10, par exemple les dents 111 d'un pignon, ce qui n'est pas nécessairement réalisable par des techniques d'usinage mécanique traditionnelles. Par ailleurs, de manière très avantageuse, une telle plaque permet la fabrication de flancs 111a d'un pignon 11 dotés d'une faible rugosité. Par exemple, une telle plaque, fabriquée par la technologie LIGA à partir de nickel Ni ou de Nickel Phosphore NiP, permet d'obtenir des dents 111 d'un pignon 11 dont la rugosité Ra des flancs 111a (mesurée parallèlement ou perpendiculaire à l'axe A1' de l'ébauche 10') est particulièrement faible, notamment de l'ordre de 50 nm. En variante, cette rugosité peut être inférieure ou égale à 50 nm, voire inférieure ou égale à 40 nm. En remarque, un usinage laser d'un tel flanc induirait une rugosité nettement supérieure, au moins de l'ordre de 80 nm.

Ainsi, selon une mise en oeuvre particulièrement avantageuse du procédé de fabrication, la première étape de micro-injection E1 peut mettre à profit un moule d'injection 8 comprenant au moins une plaque 81 intermédiaire, pouvant avantageusement comprendre du nickel Ni ou du nickel-phosphore NiP, qui est dotée d'une découpe 810 formant une cavité d'injection figurant des dents 111 d'un pignon 11. Plus généralement, le moule d'injection 8 comprend au moins une plaque 81 intermédiaire, pouvant avantageusement comprendre du nickel Ni ou du nickel-phosphore NiP, qui est dotée d'une découpe 810 formant une cavité d'injection figurant au moins ou au moins partiellement un flanc fonctionnel d'au moins une première portion.

D'autre part, les différentes parties 81, 82, 83, 84 formant le moule d'injection sont avantageusement positionnées entre elles à moindre jeu, par exemple par le biais de goupilles de positionnement. Avantageusement encore, le moule d'injection 8 permet de former une pièce injectée 100' comprenant plusieurs ébauches 10', pour fabriquer ainsi simultanément plusieurs ébauches 10' de composant horloger 10. Naturellement, l'invention ne se limite pas au moule d'injection représenté. Ainsi, en variante, ce moule pourrait ne pas comprendre de plaque amovible, mais la cavité d'injection pourrait être obtenue par toute architecture traditionnelle de moule non modulaire. Quelle que soit la variante, la cavité d'injection peut avantageusement être formée à partir d'un élément ou de plusieurs éléments dont le matériau est du nickel Ni ou du nickel-phosphore NiP ou comprenant du nickel Ni ou du nickel-phosphore NiP, en particulier lorsque l'étape E1 met en oeuvre une technique CIM (Ceramic Injection Moulding), à savoir lorsque le matériau du composant qui est injecté est une céramique technique. En variante encore, la cavité d'injection pourrait définir une seule ébauche de composant horloger.

Selon l'exemple représenté, la première étape de micro-injection E1 du procédé de fabrication permet donc de former au moins une ébauche 10' de composant horloger. Comme représenté par la figure 3, cette ébauche 10' s'étend le long d'un axe A1'. Elle est dotée d'une première portion comprenant au moins un flanc fonctionnel 111a, d'une deuxième portion 2a', et d'une troisième portion 2b', ces deuxième et troisième portions 2a', 2b' comprenant chacune une surface de révolution, qui sont ici disposées de part et d'autre de la première portion.

La première portion comprend un pignon 11 pourvu d'une denture composée de dents 111 formant des flancs fonctionnels 111a. Ces flancs fonctionnels 111a des dents 111 ont pour fonction de transmettre un couple à un autre composant horloger tel qu'une roue ou un pignon.

La deuxième portion 2a' forme un cylindre droit de diamètre d2a', supérieur aux diamètres d21a et d22a respectifs du pivot 21a et du tigeron 22a du composant horloger finalisé, qui sera détaillé par la suite. Cette deuxième portion 2a' de l'ébauche préfigure ainsi une portion 2a du composant horloger. De manière avantageuse, le diamètre d2a' est optimisé relativement à la deuxième étape qui va être décrite ci-après.

La troisième portion 2b' forme également un cylindre droit de diamètre d2b', qui présente la particularité de préfigurer à la fois une portion 2b du composant horloger à fabriquer, et une partie additionnelle qui servira de partie de préhension 3, comme cela sera détaillé par la suite.

Dans cet exemple de réalisation, il apparaît donc que la découpe 820 de la première partie 82 du moule d'injection 8 forme une portion de la cavité d'injection figurant au moins partiellement la troisième portion 2b' de l'ébauche 10'. De plus, la découpe 840 de la troisième plaque 84 forme une portion de la cavité d'injection figurant la deuxième portion 2a' de l'ébauche 10'. Enfin, la découpe 830 de la deuxième plaque 83 forme une portion de la cavité d'injection figurant un support 4 formé sur une portion centrale 99' reliant différentes ébauches 10'.

Selon le mode de réalisation de l'invention, le procédé met ensuite en oeuvre une deuxième étape d'usinage laser E2 de l'ébauche 10' issue de la première étape, notamment d'usinage laser femtoseconde. De manière générale, cette deuxième étape d'usinage laser E2 a pour but de finaliser ou quasi-finaliser le composant horloger 10 à fabriquer, en particulier la géométrie du composant horloger 10 à fabriquer, en usinant une partie de l'ébauche 10' issue de la première étape de micro-injection E1, pour atteindre une géométrie et/ou des dimensions correspondant ou correspondant sensiblement à celles du composant horloger 10 final à fabriquer. Avantageusement, au moins une partie de l'ébauche 10', notamment au moins une partie de la première portion, n'est pas usinée, et sort inchangée de cette deuxième étape d'usinage laser E2. Selon l'exemple de réalisation, le pignon 11 obtenu à l'issue de la première étape E1 n'est pas usiné lors de cette deuxième étape. Autrement dit, sa géométrie finale est définie par la seule première étape du procédé de fabrication.

Préférentiellement, cette deuxième étape d'usinage laser E2 comprend une phase de tournage, c'est-à-dire une étape d'usinage dans laquelle l'ébauche 10' de composant est entraînée en rotation autour d'un axe de rotation A9, et dans laquelle un faisceau laser est déplaçable par rapport à cet axe de rotation A9. De préférence, le balayage du laser est réalisé de manière tangentielle à l'ébauche 10' ou selon une incidence tangentielle à ladite ébauche 10'. De préférence encore, le faisceau laser balaie ladite ébauche 10' selon une trajectoire hélicoïdale. Dans tous les cas, le laser n'impacte pas le pignon 11, qui conserve donc la géométrie formée par la première étape de micro-injection.

Pour cela, cette deuxième étape utilise un équipement laser 9 doté d'un système de mise en mouvement de l'ébauche 10', en particulier de mise en rotation de l'ébauche 10' selon un axe A9, confondu avec l'axe A1' de l'ébauche 10', qui est aussi l'axe de la future surface de guidage en fabrication. Cet équipement laser 9 comprend une broche 91 rotative selon l'axe A9. De préférence, la broche 91 peut tourner à plus de 200 tours/min, voire à plus de 1'000 tours/min, voire à plus de 20'000 tours/min, voire à plus de 50'000 tours/min, voire à plus de 100'000 tours/min. Dans l'exemple de réalisation décrit pour obtenir un pignon d'échappement, la broche 91 tourne à 2'000 tours/min. Par exemple, la broche 91 est une électrobroche. De préférence, la broche 91 est équipée d'une pince de préhension 910, notamment pneumatique.

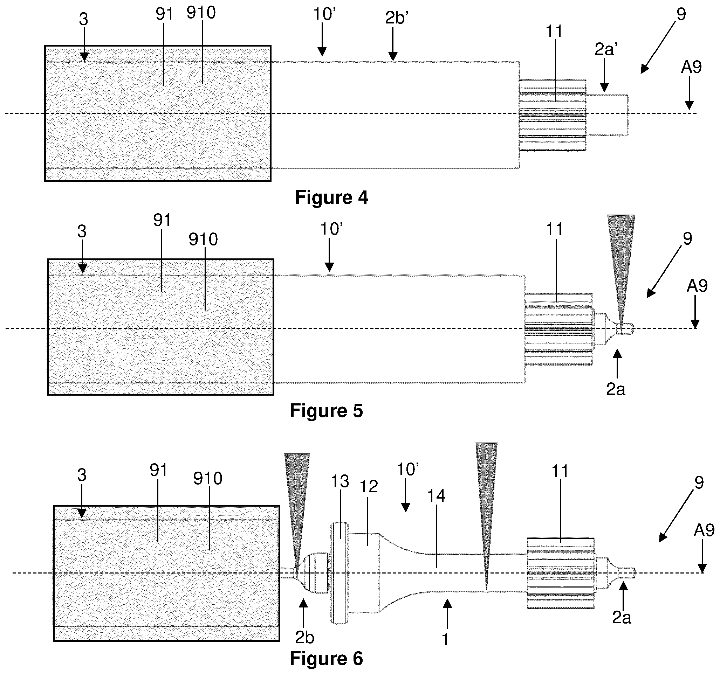

La troisième portion 2b' de l'ébauche 10' présente la particularité de former une partie de préhension 3 au niveau de son extrémité opposée à celle du pignon 11 et de la deuxième portion 2a'. Ainsi, la broche 91, en particulier la pince de préhension 910, est prévue pour coopérer avec cette partie de préhension 3 de la troisième portion 2b' de l'ébauche 10', pour assurer son maintien lors d'une même phase de tournage, comme représenté par la figure 4.

Comme illustré par la figure 5, la deuxième étape d'usinage laser E2 permet d'usiner au moins une deuxième portion 2a' de l'ébauche 10', en vue de la transformer en une deuxième portion 2a du composant horloger 10, qui sera décrit plus en détail par la suite. En complément, illustré par la figure 6, cet usinage concerne aussi une partie de la troisième portion 2b', pour former différentes parties 12, 13, 14 qui seront aussi détaillées par la suite. De cette façon, les défauts de coaxialité entre les différentes portions 1 (disposée entre les portions 2a et 2b), 2a, et 2b du composant horloger 10 en fabrication sont minimisés autant que faire se peut.

Préférentiellement, le laser utilisé produit des impulsions ultrabrèves. Il s'agit en particulier d'un laser femtoseconde de manière à ne pas affecter la structure de la matière usinée, en particulier lors du tournage laser, dans des longueurs d'onde, des durées d'impulsion, et d'énergie par pulse adaptées. En particulier, le laser utilisé produit des impulsions inférieures à 600 fs, voire inférieures à 350 fs. De préférence, le faisceau laser émet dans l'infrarouge avec une longueur d'onde comprise entre 800 nm et 1100 nm, idéalement de 1030 nm ± 5 nm ou dans le vert avec une longueur d'onde comprise entre 500 nm et 540 nm, idéalement de 515 nm ± 2.55 nm ou dans le bleu avec une longueur d'onde comprise entre 400 nm et 480 nm ou dans l'ultraviolet avec une longueur d'onde inférieure à 400 nm, idéalement de 343 nm ± 25 nm. En particulier, les lasers vert et UV permettent d'obtenir des rugosités Ra satisfaisantes en sortie d'usinage, de l'ordre de 50 nm, voire de 40 nm, pour diverses céramiques techniques.

De préférence, le faisceau laser a une énergie moyenne par impulsion comprise entre 0.001 mJ et 2 mJ, de préférence comprise entre 0.01 mJ et 0.5 mJ, voire même entre 0.04 et 0.05 mJ pour les matières et les dimensions testées. De préférence encore, le faisceau laser a un diamètre compris entre 5 µm et 100 µm, de préférence entre 10 µm et 60 µm et idéalement entre 15 µm et 25 µm pour les matières et les dimensions testées.

Le taux de recouvrement latéral, c'est-à-dire perpendiculairement à la direction de chariotage, à savoir perpendiculairement à l'axe A9, est défini par la vitesse de rotation de l'ébauche 10' et la fréquence du laser, et peut être défini entre 0% et 99.9%. Il est de préférence compris entre 20% et 99.9%, idéalement compris entre 99.6% et 99.8%.

Le taux de recouvrement longitudinal est défini par la vitesse de balayage ou de chariotage du faisceau et la fréquence du laser, et peut être défini entre 0 et 99.9%. Il est de préférence compris entre 20 et 99.9%, idéalement compris entre 0% et 80.8%.

Ainsi, à l'issue de cette première phase d'usinage de la deuxième étape E2, les surfaces de révolution des portions 2a et 2b, mais aussi des parties 12, 13, 14 de la portion 1 du composant horloger en fabrication présentent des rugosités Ra du même ordre que celles des flancs fonctionnels 111a résultant de la première étape, de l'ordre de 50 nm, voire de l'ordre de 40 nm. D'autre part, du fait de l'utilisation de la partie de préhension 3 formée sur l'ébauche 10', l'ensemble de l'usinage peut être réalisé en une seule étape, notamment dans une même phase de tournage.

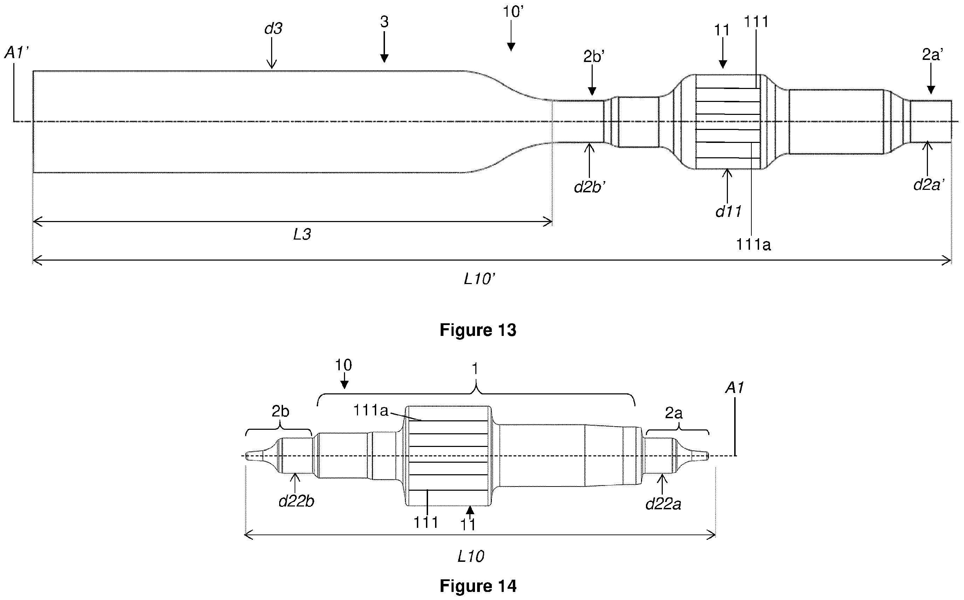

En remarque, pour cet usinage avantageux tel que décrit, l'ébauche 10' présente avantageusement une longueur L10', mesurée selon l'axe A1' de l'ébauche 10', supérieure à la longueur L10, mesurée selon l'axe A1, du composant horloger 10 en fabrication, comme cela est notamment illustré par les figures 13 et 14. Cette longueur supérieure permet de former la partie de préhension 3 décrite précédemment. Préférentiellement, la partie de préhension 3 présente un diamètre d3 qui correspond au plus grand diamètre de l'ébauche 10'. Préférentiellement, la longueur L10' est supérieure ou égale à 1.5*L10, voire supérieure ou égale à 2*L10. Autrement dit, la longueur L3 de la partie de préhension est égale ou sensiblement également à la longueur L10, voire supérieure à la longueur L10, notamment de l'ordre de 1.5*L10.

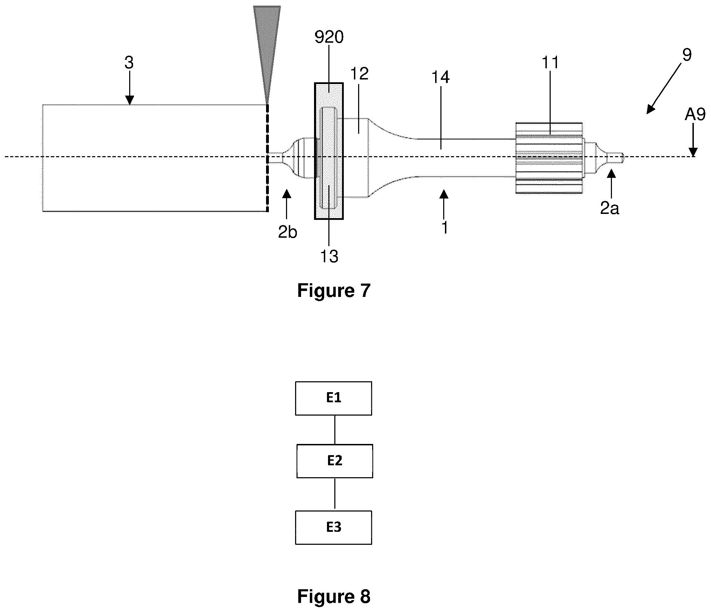

Une fois la première phase d'usinage décrite précédemment terminée, une phase de tronçonnage est prévue afin de séparer la portion usinée de la partie de préhension 3 de la troisième portion 2b' de l'ébauche 10', comme représenté par la figure 7. Avantageusement, cette phase de tronçonnage permet également de former le bout arrondi du deuxième pivot 21b dont les dimensions et/ou la géométrie correspondent ou correspondent sensiblement à celles du deuxième pivot 21b finalisé du composant horloger 10. Pour ce faire, une pince de préhension 920 peut être prévue pour coopérer avec, par exemple, la partie cylindrique 13 de plus grand diamètre d13 de la partie usinée précédemment, afin de maintenir ladite partie, tandis que la partie de préhension 3 de l'ébauche 10' est libérée de la pince de préhension 910. Naturellement, toute autre partie du composant est susceptible de coopérer avec la pince de préhension 920.

En variante, la deuxième étape d'usinage pourrait être une étape d'usinage mécanique. Elle pourrait ainsi comprendre une étape de décolletage et/ou de meulage de l'ébauche, et/ou de roulage de l'ébauche, notamment lorsque le matériau du composant est un matériau amorphe, comme un verre métallique.

Un composant horloger 10 dont la géométrie et/ou les dimensions correspondent ou correspondent sensiblement à celles du composant horloger finalisé est ainsi obtenu à l'issue de cette deuxième étape.

On note donc que le composant horloger 10 fabriqué comprend une première portion avec des flancs fonctionnels qui est uniquement formée par la première étape de micro-injection, qui n'est pas modifiée, voire très peu, par la deuxième étape d'usinage. Cette première étape forme toutefois une ébauche seulement d'au moins une deuxième portion du composant horloger. Une deuxième étape d'usinage forme ensuite spécifiquement cette deuxième portion à partir de cette ébauche, dont la forme est choisie pour optimiser l'étape d'usinage.

La fabrication d'un composant horloger telle que décrite précédemment permet de former un composant complexe, comprenant au moins une première portion comprenant au moins un flanc fonctionnel, destiné à une transmission d'énergie vers un autre composant ou à une dissipation d'énergie provenant d'un autre composant, et au moins une deuxième portion comprenant une surface de guidage. Pour leur fonctionnement optimal, ces deux portions nécessitent de présenter une géométrie très précise, ainsi qu'un état de surface sans défaut, à très faible rugosité. Comme les surfaces de ces deux portions présentent des formes très éloignées et des orientations pouvant être très différentes, il s'est avéré difficile, voire impossible, d'atteindre un résultat satisfaisant, notamment une rugosité satisfaisante, simultanément sur ces deux portions distinctes par leur fabrication par une même technique, par exemple un seul usinage. Une telle approche à une seule technique nécessiterait une tribofinition longue et fastidieuse, qui ne serait pas sans risque de finalement affecter l'intégrité géométrique d'une des deux portions pour atteindre un résultat satisfaisant sur la seule autre portion. En particulier, la tribofinition de la première portion pourrait affecter l'intégrité géométrique de la surface de guidage de la deuxième portion, en particulier l'intégrité géométrique du pivot de la deuxième portion.

Par l'approche choisie, chaque portion est finalement obtenue par une technique différente, pour atteindre rapidement et simplement un résultat satisfaisant, qui pourrait même rendre optionnelle l'application d'une tribofinition finale. D'autre part, comme cela a été précisé, cette approche de l'invention est de plus compatible avec un grand nombre de matériaux, dont la céramique. L'invention a en effet pu être mise en oeuvre de manière surprenante avec une céramique technique.

Le procédé selon l'invention est ainsi parfaitement adapté pour la fabrication d'un composant horloger monobloc, d'un seul tenant, qui comprend à la fois une portion fonctionnelle avec des flancs fonctionnels prévus pour une transmission de couple ou plus généralement d'énergie vers un autre composant ou prévus pour une dissipation de couple ou plus généralement d'énergie provenant d'un autre composant, et une portion de guidage, comprenant une surface de guidage, notamment une surface de révolution, pour guider le composant horloger dans son mouvement.

Le procédé selon l'invention est de plus parfaitement adapté pour la fabrication de composants horlogers de très petite dimension, par exemple comprenant des sections transversales inscrites dans un cercle de rayon inférieur ou égal à 0.2 mm, voire inférieur ou égal à 0.1 mm. Il permet aussi de fabriquer des portions de guidage, notamment des surfaces de révolution, qui peuvent présenter des géométries très élaborées à l'échelle du dixième de millimètre, voire du centième de millimètre.

On note ainsi que dans des cas de figure bien spécifiques qui peuvent être liés à des formats et/ou des conformations particulières des dents d'un pignon, un usinage, en particulier un usinage laser, pourrait prétériter la performance mécanique des dents, et donc leur capacité à transmettre un couple, du fait de la fluence énergétique avec laquelle est traversée la matière, en particulier la céramique.

En remarque, pour simplifier la description, on appelle « composant horloger », le composant obtenu après la mise en oeuvre des deux étapes E1, E2 du procédé, quand bien même il peut encore subir une ou plusieurs étapes supplémentaires, notamment de tribofinition.

En effet, selon une variante de réalisation, le procédé de fabrication met en oeuvre une troisième étape de tribofinition E3, optionnelle. Selon l'exemple de réalisation, cette troisième étape comprend une phase de polissage en vrac du composant horloger 10 issu de la deuxième étape.

De préférence, en particulier pour un composant horloger en céramique, l'étape de tribofinition comprend l'utilisation de particules abrasives, en particulier en diamant, dont la taille est de l'ordre de 1 µm. De préférence, l'étape de tribofinition comprend, entre autres, l'utilisation d'un porteur, en particulier en céramique, pouvant se présenter sous forme de billes de dimension comprise entre 125 et 250 µm, additionné d'eau et d'un additif. Avantageusement, les dimensions et/ou les géométries des particules abrasives et/ou des porteurs sont conformées de façon à ne pas venir se coincer entre les dents 111 du pignon 11.

Un tel polissage en vrac permet d'obtenir un composant horloger comprenant une surface de guidage, en particulier en céramique, qui est conforme géométriquement et qui présente une rugosité adéquate après une tribofinition d'une durée raisonnable, typiquement de l'ordre de 10 heures. Cette étape de tribofinition est paramétrée de manière à ne pas modifier la géométrie de la surface de guidage, notamment de manière à éviter d'arrondir excessivement l'extrémité du ou des pivot(s). Il est donc essentiel que la rugosité initiale des première et deuxième portions avant cette étape soit assez faible pour permettre une étape de tribofinition d'une durée raisonnable. La rugosité Ra de la surface de révolution des deux pivots 21a, 21b finalement obtenue est par exemple de l'ordre de 10 à 15 nm. Plus généralement, cette deuxième étape permet de fabriquer au moins une surface de guidage de rugosité inférieure ou égale à 15 nm, voire inférieure ou égale à 12 nm, voire inférieure ou égale à 10 nm, et optionnellement supérieure ou égale à 5 nm.

Alternativement ou complémentaire à cette troisième étape E3, la deuxième étape d'usinage laser E2 peut comprendre une phase de finition mettant en oeuvre l'équipement laser 9, et ce par le biais d'un balayage du faisceau laser qui est paramétré en fréquence et/ou en temps pour polir au moins une portion 2a, 2b, de préférence les portions 1, 2a, 2b, en particulier les pivots 21a, 21b.

En résumé, comme représenté schématiquement par la figure 8, le procédé de fabrication d'un composant horloger selon l'invention, comprenant au moins une première portion comprenant au moins un flanc fonctionnel destiné à une transmission d'énergie vers un autre composant ou à une dissipation d'énergie provenant d'un autre composant et au moins une deuxième portion comprenant une surface de guidage, comprend les étapes suivantes :
- une première étape de micro-injection E1 formant une ébauche 10' du composant horloger 10, ladite ébauche 10' comprenant ladite au moins une première portion et ledit au moins un flanc fonctionnel et comprenant une ébauche de la deuxième portion, puis
- une deuxième étape d'usinage E2, en particulier d'usinage laser E2, notamment d'usinage laser femtoseconde, d'au moins une partie de l'ébauche 10' du composant horloger, cette partie comprenant l'ébauche de la deuxième portion pour former la deuxième portion et ladite surface de guidage.
- optionnellement, une troisième étape ultérieure de tribofinition E3, distincte de la deuxième étape d'usinage laser E2, notamment une étape de polissage en vrac et/ou en utilisant des particules abrasives.

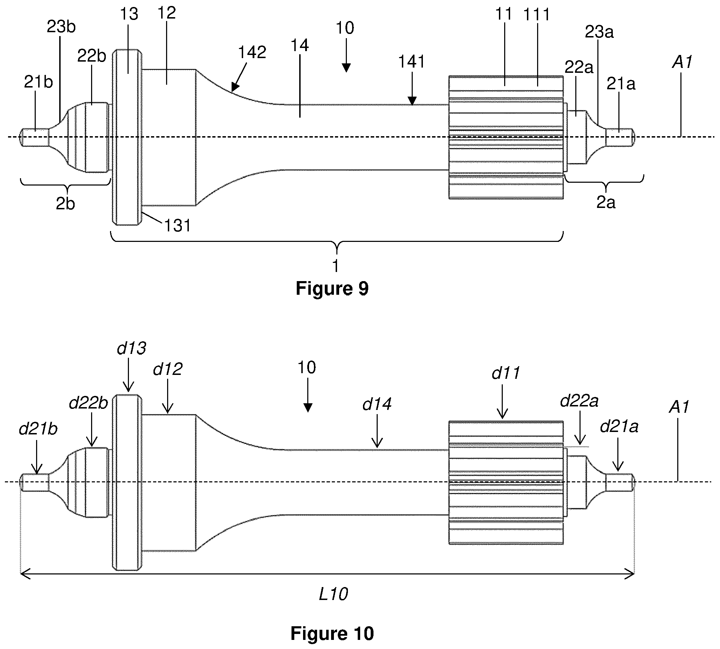

Comme cela ressort du procédé de fabrication décrit précédemment, l'invention est particulièrement adaptée pour la fabrication de composants horlogers 10 complexes, notamment un pignon d'échappement, comme représenté par les figures 9 à 12.

Un tel pignon d'échappement présente un axe A1. Il comprend une première portion 1 dotée d'un pignon 11 pourvu d'une denture composée de dents 111 dont le diamètre de tête est d11. Les flancs 111a des dents, orientés radialement vis-à-vis de l'axe A1, font ici office de flancs fonctionnels prévus pour transmettre un couple relativement audit axe A1. Ce pignon 11 est formé par la première étape du procédé de fabrication, comme décrit précédemment.

La première portion 1 du composant horloger 10 comprend également une première partie 12 de réception d'un autre composant horloger, en particulier d'une roue d'échappement qui est destinée à être chassée sur ladite partie 12. Cette dernière se présente ici plus particulièrement sous la forme d'un cylindre droit de révolution de diamètre d12. La première portion 1 comprend également une deuxième partie 13 cylindrique de diamètre d13, juxtaposée à la première partie 12, qui est destinée à former une portée ou une assise de réception 131 d'un tel autre composant horloger, en particulier une roue d'échappement dont la planche est destinée à venir en butée à l'encontre de ladite portée 131. A cet effet, le diamètre d13 est strictement supérieur au diamètre d12. En variante, le composant horloger pourrait être dénué de deuxième partie 13 cylindrique, notamment dans le cas dans lequel la planche de la roue d'échappement est destinée à être chassée en position sur la première partie 12.

Les deux parties 12 et 13 sont séparées du pignon 11 selon une direction parallèle à l'axe A1 par une partie intermédiaire 14 formant principalement le corps du composant horloger 10. Cette partie intermédiaire 14 comprend un premier tronçon 141 formant un cylindre droit de diamètre d14 jouxtant le pignon 11, ainsi qu'une deuxième partie évasée 142 reliant la première partie 12 et le tronçon 141. En variante, la partie intermédiaire 14 pourrait se présenter entièrement sous la forme d'un cylindre droit.

Le pignon d'échappement comprend également une deuxième portion 2a et une troisième portion 2b, disposées de part et d'autre de la première portion 1. En particulier, la deuxième portion 2a jouxte le pignon 11 à une première extrémité du pignon d'échappement, tandis que la troisième portion 2b jouxte la deuxième partie 13 à une deuxième extrémité du pignon d'échappement 10. Ces deuxième et troisième portions 2a, 2b comprennent chacune respectivement un pivot 21a, 21b relié à un tigeron 22a, 22b par l'intermédiaire d'un congé 23a, 23b. Ces différentes parties forment chacune une surface de révolution autour de l'axe A1. En particulier, les pivots 21a, 21b forment chacun une surface de révolution autour de l'axe A1. Elles forment des surfaces de guidage, prévues pour guider le composant horloger en rotation autour de son axe A1. Pour cela, il est possible de considérer qu'un tel pignon d'échappement comprend deux surfaces de guidage, et ainsi deux deuxième portions.

Dans l'exemple de composant horloger représenté, les pivots 21a, 21b prennent chacun la forme d'un cylindre droit dont le bout (à savoir la zone extrémale) est arrondi. En particulier, ces pivots présentent chacun un même diamètre d21a, d21b qui est inférieur à 0.1 mm, de l'ordre de 0.09 mm.

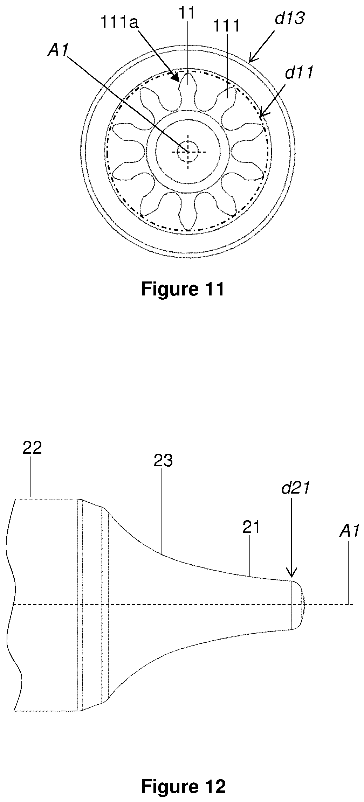

Dans une conception alternative de pivot telle que celle représentée par la figure 12, le pivot ou les pivots pourraient former une surface de révolution autour d'un axe comprenant une génératrice courbe se présentant très précisément sous forme de spline ou de portions de courbes splines raccordées de manière continue. En particulier, dans ce cas de figure, le congé 23 reliant le pivot 21 au tigeron 22 pourrait être formé dans la continuité du pivot. Dans certains cas d'usage, notamment pour un arbre de balancier, une section d'un pivot peut présenter un diamètre inférieur à 80 µm , de l'ordre de 50 µm ou 60 µm.

La longueur L10 du pignon d'échappement, à savoir la dimension mesurée selon l'axe A1 entre les sommets de chacun des bouts des pivots 21a, 21b, est quant à elle préférentiellement supérieure à 2 mm, voire 3 mm, voire 4 mm. Dans l'exemple illustré sur les figures 8 à 11, la longueur L10 est de l'ordre de 3.2 mm.

Le composant horloger a été décrit dans le cadre d'un pignon d'échappement. Naturellement, l'invention ne se limite pas à un tel composant horloger, qui peut être en variante tout pignon arbré, une bascule arbrée, un levier arbré ou une came arbrée. Le composant horloger peut être de type axe, comme un axe de balancier d'un oscillateur horloger du type balancier-spiral, notamment un axe de balancier doté d'un crantage afin de favoriser, par exemple, le maintien du balancier et/ou de la virole du spiral, et/ou du plateau de balancier. Il peut être tout axe d'un mobile d'échappement ou un axe d'un mobile des secondes.

A titre de variante de réalisation, les figures 13 et 14 illustrent la réalisation d'un composant horloger 10 qui est un axe de balancier. Préférentiellement, l'ébauche 10' de ce composant horloger 10, représentée par la figure 13, présente une géométrie au plus proche de celle du composant horloger 10 final, représenté par la figure 14, de façon à constituer une préforme. En particulier, dans ce cas de l'ébauche 10' d'arbre de balancier, celle-ci comprend notamment une portion 11 de diamètre d11 qui correspond ou correspond sensiblement au diamètre d11 de la portion 11 de l'arbre de balancier finalisé. Cette portion 11 présente la particularité de comprendre des dents 111 dont les flancs 111a sont prévus pour permettre une indexation angulaire et garantir la tenue angulaire d'un balancier sur l'axe de balancier. Ainsi, la portion 11 comprend des dents 111 dont les flancs 111a sont prévus pour dissiper un couple ou plus généralement une énergie provenant d'un autre composant du mouvement comme un balancier (lors de son fonctionnement ou lors de son assemblage) de sorte à éviter toute désolidarisation des deux composants. Les flancs 111a constituent ainsi des flancs d'indexation angulaire formant un crantage entre l'axe et un balancier. Par ailleurs, les diamètres d2a' et d2b' des formes cylindriques produites sur l'ébauche 10' au niveau des extrémités finales du composant horloger 10, s'approchent au mieux des diamètres respectifs d22a et d22b des tigerons 22a, 22b des portions 2a, 2b formant des surfaces de guidage.

Avantageusement, le procédé de l'invention est utilisé pour fabriquer un composant horloger qui comprend une surface de guidage comprenant un pivot ou se présentant sous la forme d'un pivot. Par « pivot », nous entendons une portion de composant, en particulier d'axe, prévue pour coopérer, notamment coopérer par contact, avec un palier, en particulier une pierre de pivotement. Ce pivot peut présenter au moins une portion de géométrie cylindrique ou conique ou tronconique. Le pivot est préférentiellement disposé à une extrémité de l'axe. Le pivot peut, par exemple, être formé dans la continuité d'une portion d'axe comprenant une surface à génératrice courbe.

L'invention porte aussi sur un mouvement horloger qui comprend également un palier, voire plusieurs paliers montés sur un élément du mouvement, notamment sur un bâti du mouvement. Le composant horloger est ainsi par exemple destiné à coopérer, notamment à coopérer par contact, avec le palier. En particulier, le composant horloger coopère avec le palier au niveau du pivot. Plus particulièrement encore, le composant horloger coopère avec le palier au niveau d'une surface de révolution située au niveau du pivot. Le diamètre d'une section de la surface de révolution est par exemple inférieur ou égal à 200 µm, voire inférieur ou égal à 100 µm, voire inférieur ou égal à 80 µm, voire inférieur ou égal à 60 µm. Optionnellement, le pivot peut être délimité axialement par un contre-pivot au niveau d'une extrémité du pivot.

Avantageusement, le composant horloger comprend deux pivots pour coopérer avec deux paliers de sorte à guider le composant horloger relativement aux paliers et plus globalement relativement à l'élément de mouvement horloger sur lequel les paliers sont montés.

Avantageusement, le composant horloger ou une partie du composant horloger est en céramique, notamment intégralement en céramique. La surface de révolution formant la surface de guidage est donc réalisée en céramique, c'est-à-dire que la surface de révolution est formée ou se trouve sur une partie en céramique du composant. De préférence, la céramique est une zircone, en particulier une zircone yttriée, notamment une zircone yttriée 3% (à savoir comprenant un taux d'yttrine de 3% molaires), une alumine monocristalline ou une combinaison alumine-zircone (ATZ). Le composant horloger dans son ensemble, ou au moins une partie comprenant une première portion avec au moins un flanc fonctionnel et une deuxième portion comprenant une surface de guidage, se présente avantageusement de manière monobloc d'un seul tenant.

Ainsi, de préférence, tout ou partie du composant horloger est en céramique, et comprend une surface de guidage dont la rugosité Ra est inférieure ou égale à 15 nm. Préférentiellement encore, le composant horloger comprend un pivot comprenant ladite surface de guidage. Avantageusement, la contrainte à la rupture en cisaillement du pivot du composant est supérieure à 200 N.mm⁻², voire supérieure à 250 N.mm⁻².

## Revendications

1. Procédé de fabrication d'un composant horloger (10), comprenant au moins une première portion comprenant au moins un flanc fonctionnel, destiné à une transmission d'énergie vers un autre composant ou à une dissipation d'énergie provenant d'un autre composant, et au moins une deuxième portion comprenant une surface de guidage, **caractérisé en ce que** le procédé comprend :
- une première étape de micro-injection (E1) formant une ébauche (10') du composant horloger, ladite ébauche comprenant ladite au moins une première portion et ledit au moins un flanc fonctionnel et comprenant une ébauche de la deuxième portion, puis
- une deuxième étape d'usinage (E2), en particulier une deuxième étape d'usinage laser, notamment d'usinage laser femtoseconde, d'au moins une partie de l'ébauche du composant horloger, cette partie comprenant l'ébauche de la deuxième portion pour former la deuxième portion comprenant ladite surface de guidage.

2. Procédé de fabrication d'un composant horloger selon la revendication précédente, **caractérisé en ce qu'**il comprend une troisième étape ultérieure de tribofinition (E3), distincte de l'étape d'usinage (E2), notamment une étape de polissage en vrac et/ou mettant en oeuvre des particules abrasives, en particulier en diamant, et/ou des porteurs, en particulier en céramique, sous forme de billes, et/ou **en ce que** la deuxième étape d'usinage (E2) est une deuxième étape d'usinage laser comprenant une sous-étape de finition réalisant un polissage à l'aide du même laser, reparamétré, que celui utilisé pour procéder à l'usinage.

3. Procédé de fabrication d'un composant horloger selon la revendication précédente, **caractérisé en ce qu'**il comprend la troisième étape de tribofinition (E3), d'une durée inférieure ou égale à 15 heures, voire inférieure ou égale à 10 heures, de sorte à obtenir une rugosité Ra de ladite surface de guidage inférieure à 15 nm, voire inférieure ou égale à 12 nm, voire inférieure ou égale à 10 nm, et optionnellement supérieure ou égale à 5 nm.

4. Procédé de fabrication d'un composant horloger selon l'une des revendications précédentes, **caractérisé en ce que** la première étape de micro-injection (E1) comprend l'injection d'un matériau dans une cavité d'injection d'un moule d'injection (8), ledit matériau étant un polymère, un composite, un métal, ou une céramique technique, notamment majoritairement composée d'oxyde de zirconium, et/ou d'alumine, ou un matériau amorphe, notamment un alliage métallique amorphe, notamment comprenant une base métallique formée d'au moins un métal parmi les éléments Ni, Cu, Pd, Pt, Fe, Co, Ti, Nb, Zr.

5. Procédé de fabrication d'un composant horloger selon la revendication précédente, **caractérisé en ce que** le moule d'injection (8) comprend une cavité d'injection faite au moins partiellement en un matériau comprenant du nickel Ni ou du nickel-phosphore NiP, en particulier comprend au moins une plaque amovible avec un matériau comprenant du nickel Ni ou du nickel-phosphore NiP, notamment obtenue par une étape de croissance LIGA, comprenant une découpe (810, 830, 840) qui forme une partie de la cavité d'injection du moule d'injection (8) destinée à former l'au moins un flanc fonctionnel de la première portion et/ou à former l'ébauche de la deuxième portion.

6. Procédé de fabrication d'un composant horloger selon la revendication 4 ou 5, **caractérisé en ce que** la cavité d'injection du moule d'injection (8) comprend une forme permettant de fabriquer simultanément plusieurs ébauches (10') de composant horloger (10), solidaires entre elles par un support intermédiaire (4, 99'), et **en ce que** le procédé comprend une étape de séparation desdites ébauches (10') du support intermédiaire (4, 99') après démoulage.

7. Procédé de fabrication d'un composant horloger selon l'une des revendications précédentes, **caractérisé en ce que** la deuxième étape d'usinage (E2) est une deuxième étape d'usinage laser comprenant une phase de tournage autour d'un axe de rotation (A9) correspondant à l'axe (A1') de l'ébauche (10'), notamment une rotation à une vitesse supérieure ou égale à 200 tours/min, voire supérieure ou égale à 1'000 tours/min, voire supérieure ou égale à 20'000 tours/min, voire supérieure ou égale à 50'000 tours/min, voire supérieure ou égale à 100'000 tours/min, durant laquelle un faisceau laser est déplacé par rapport à cet axe de rotation, notamment pour mettre en oeuvre un balayage laser tangentiel à l'au moins une partie de l'ébauche du composant horloger, notamment selon un balayage formant une trajectoire hélicoïdale.

8. Procédé de fabrication d'un composant horloger selon l'une des revendications précédentes, **caractérisé en ce que** le laser de la deuxième étape d'usinage (E2) est une deuxième étape d'usinage laser émettant un faisceau laser infrarouge, notamment un faisceau laser infrarouge ayant une longueur d'onde comprise entre 800 nm et 1100 nm, en particulier une longueur d'onde de 1030 nm ± 5 nm, ou un faisceau laser vert, notamment un faisceau laser vert ayant une longueur d'onde comprise entre 500 nm et 540 nm, en particulier une longueur d'onde de 515 nm ± 2.55 nm, ou un faisceau laser ultraviolet, notamment un faisceau laser ultraviolet ayant une longueur d'onde inférieure à 400 nm, en particulier une longueur d'onde de 343 nm ± 25 nm, ou un faisceau laser bleu, notamment un faisceau laser bleu ayant une longueur d'onde comprise entre 400 nm et 480 nm.

9. Procédé de fabrication d'un composant horloger selon l'une des revendications précédentes, **caractérisé en ce que** la première étape de micro-injection (E1) produit le au moins un flanc fonctionnel avec une rugosité Ra de sa surface inférieure ou égale à 50 nm, voire inférieure ou égale à 40 nm.

10. Procédé de fabrication d'un composant horloger selon l'une des revendications précédentes, **caractérisé en ce que** le laser de la deuxième étape d'usinage (E2) génère une surface de guidage de rugosité Ra inférieure ou égale à 50 nm, voire inférieure ou égale à 40 nm.

11. Procédé de fabrication d'un composant horloger selon l'une des revendications précédentes, **caractérisé en ce que** la deuxième étape d'usinage (E2), en particulier la deuxième étape d'usinage laser, comprend une étape préalable de préhension de l'ébauche (10') de composant horloger (10) par l'intermédiaire d'une partie de préhension (3), agencée à une extrémité de l'ébauche (10') de composant horloger (10) dont la longueur (L10') est supérieure à la longueur (L10) du composant horloger (10) à fabriquer, afin de maintenir l'ébauche (10') de composant horloger (10) durant l'usinage, et **en ce que** la deuxième étape d'usinage (E2) comprend une sous-étape finale de tronçonnage de ladite partie de préhension (3) pour la supprimer et conserver une ébauche (10') de composant horloger (10) de longueur égale ou sensiblement égale à celle du composant horloger (10) à fabriquer.

12. Procédé de fabrication d'un composant horloger selon l'une des revendications précédentes, **caractérisé en ce que** le composant horloger est un pignon arbré, en particulier un pignon d'échappement, ou une bascule arbrée, ou un levier arbré ou une came arbrée, ou un arbre de balancier doté d'un crantage, notamment un crantage favorisant le maintien du balancier et/ou d'un spiral, et/ou d'un plateau de balancier.

13. Procédé de fabrication d'un composant horloger selon l'une des revendications précédentes, **caractérisé en ce que** le flanc fonctionnel de la première portion est configuré pour la transmission d'un mouvement ou d'un couple, notamment constitue le flanc d'une dent (11) d'un pignon (111), d'une roue ou d'un secteur denté, ou est un flanc d'indexation angulaire, notamment configuré pour un crantage.

14. Procédé de fabrication d'un composant horloger selon l'une des revendications précédentes, **caractérisé en ce que** la surface de guidage de la deuxième portion comprend une surface d'un pivot du composant horloger (10) et/ou **en ce que** la surface de guidage comprend au moins une section de diamètre inférieur ou égal à 200 µm, voire inférieur ou égal à 100 µm, voire inférieur ou égal à 80 µm, voire inférieur ou égal à 60 µm.

15. Procédé de fabrication d'un composant horloger selon l'une des revendications précédentes, **caractérisé en ce que** la deuxième étape d'usinage (E2) est mise en oeuvre en dehors de ladite au moins une première portion qui reste inchangée durant cette deuxième étape d'usinage (E2).

16. Composant horloger (10), comprenant au moins une première portion comprenant au moins un flanc fonctionnel, destiné à une transmission d'énergie vers un autre composant ou à une dissipation d'énergie provenant d'un autre composant, et au moins une deuxième portion comprenant une surface de guidage, **caractérisé en ce que** la première et la deuxième portions du composant horloger (10) se présentent sous une forme monobloc d'un seul tenant et **en ce que** ledit flanc fonctionnel présente une rugosité Ra de sa surface inférieure ou égale à 50 nm, voire inférieure ou égale à 15 nm, voire inférieure ou égale à 12 nm, voire inférieure ou égale à 10 nm, et optionnellement supérieure ou égale à 5 nm.

17. Composant horloger (10) selon la revendication précédente, **caractérisé en ce que** la première et la deuxième portions sont en polymère, en composite, en métal, ou en céramique technique, notamment majoritairement composée d'oxyde de zirconium, et/ou d'alumine, ou en matériau amorphe, notamment en alliage métallique amorphe, notamment comprenant une base métallique formée d'au moins un métal parmi les éléments Ni, Cu, Pd, Pt, Fe, Co, Ti, Nb, Zr.

18. Composant horloger (10) selon la revendication 16 ou 17, **caractérisé en ce que** ladite surface de guidage comprend un pivot formant une surface de révolution et comprenant au moins une section de diamètre inférieur ou égal à 200 µm, voire inférieur ou égal à 100 µm, voire inférieur ou égal à 80 µm, voire inférieur ou égal à 60 µm, et comprend une rugosité Ra inférieure à 15 nm, voire inférieure ou égale à 12 nm, voire inférieure ou égale à 10 nm, et optionnellement supérieure ou égale à 5 nm.

19. Composant horloger (10) selon l'une des revendication 16 à 18, **caractérisé en ce qu'**il est un pignon arbré, en particulier un pignon d'échappement, ou une bascule arbrée, ou un levier arbré ou une came arbrée, ou un arbre de balancier doté d'un crantage, notamment un crantage favorisant le maintien du balancier et/ou d'un spiral, et/ou d'un plateau de balancier.
